(19) Europäisches Patentamt
European Patent Office
Office européen des brevets

(11) **EP 1 899 082 B1**

(12) **FASCICULE DE BREVET EUROPEEN**

(45) Date de publication et mention
de la délivrance du brevet:
**17.08.2016 Bulletin 2016/33**

(51) Int Cl.:
*B23K 26/00* (2014.01)   *B23K 26/03* (2006.01)
*B23K 26/14* (2006.01)   *G21F 9/30* (2006.01)
*B23K 101/34* (2006.01)   *B23K 26/361* (2014.01)
*B23K 26/082* (2014.01)   *B23K 26/0622* (2014.01)
*B08B 15/04* (2006.01)   *B08B 7/00* (2006.01)
*G21F 9/00* (2006.01)

(21) Numéro de dépôt: **06755497.2**

(22) Date de dépôt: **18.05.2006**

(86) Numéro de dépôt international:
**PCT/FR2006/001119**

(87) Numéro de publication internationale:
**WO 2006/136669 (28.12.2006 Gazette 2006/52)**

(54) **PROCEDE ET DISPOSITIF D'ABLATION LASER D'UNE COUCHE SUPERFICIELLE D'UNE PAROI, TELLE QU'UN REVETEMENT DE PEINTURE DANS UNE INSTALLATION NUCLEAIRE**

VERFAHREN UND VORRICHTUNG ZUM LASERABTRAG DER OBERFLÄCHENBESCHICHTUNG EINER WAND, BEISPIELSWEISE DES FARBAUFTRAGS IN EINER KERNTECHNISCHEN ANLAGE.

METHOD AND DEVICE FOR LASER ABLATION OF A SURFACE COATING FROM A WALL, SUCH AS A COAT OF PAINT IN A NUCLEAR PLANT

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **20.06.2005 FR 0506232**

(43) Date de publication de la demande:
**19.03.2008 Bulletin 2008/12**

(73) Titulaire: **Commissariat à l'Énergie Atomique et aux Énergies Alternatives**
**75015 Paris (FR)**

(72) Inventeurs:
• **CHAMPONNOIS, François**
**91440 Bures-sur-Yvette (FR)**
• **CORMONT, Philippe**
**33110 Le Bouscat (FR)**
• **GELEOC, Marie**
**91400 Saclay (FR)**
• **HUBERT, Christophe**
**51490 Pontfaverger (FR)**
• **LASCOUTOUNA, Christian**
**91580 Souzy-la-Briche (FR)**
• **THRO, Pierre-Yves**
**91190 Gif-sur-Yvette (FR)**
• **WODLING, Pascal**
**91400 Orsay (FR)**

(74) Mandataire: **Gevers & Orès**
**41 avenue de Friedland**
**75008 Paris (FR)**

(56) Documents cités:
EP-A- 0 091 646   EP-A- 0 642 846
FR-A- 2 700 882   FR-A- 2 863 916

## Description

La présente invention concerne un procédé d'ablation laser d'une couche superficielle d'une paroi, telle qu'un revêtement mural de peinture dans une installation nucléaire, et un dispositif pour la mise en oeuvre de ce procédé.

La décontamination et l'assainissement des installations nucléaires obsolètes ou ayant atteint leur limité d'âge sont devenus une priorité pour l'industrie nucléaire. On s'efforce de nettoyer les parties contaminées de ces installations, en évitant de produire des déchets également contaminés et en tâchant de minimiser les effluents de nettoyage.

Pour une grande partie des murs des locaux nucléaires, un simple enlèvement de la peinture suffit. Les techniques utilisées à ce jour sont notamment le décapage au moyen d'une meuleuse, d'une grignoteuse, par sablage ou par gels chimiques. Ces techniques ont pour intérêt principal leur simplicité de mise en oeuvre technologique. Cependant, elles présentent des inconvénients tels que leur coût élevé, directement imputable à l'intervention humaine en milieu irradié, le dégagement important de poussières dans le local et la quantité de déchets générés.

Une autre solution connue pour effectuer la décontamination d'installations nucléaires consiste à utiliser l'ablation laser, qui consiste à retirer une couche d'épaisseur réduite du matériau contaminant à enlever, via l'interaction d'une lumière cohérente et focalisée issue d'un laser pulsé avec ce matériau. L'échauffement rapide de la surface de cette couche provoque la vaporisation puis l'éjection des premières strates du matériau. Cette technique d'ablation laser est également applicable à d'autres domaines non nucléaires.

Les dispositifs d'ablation laser utilisés comportent typiquement une tête laser (i.e. source laser) prévue pour générer un faisceau laser pulsé et des moyens de transport de ce faisceau jusqu'à une tête de tir ou « tête de décapage »située en aval de la tête laser, et qui est pourvue d'un système optique pour focaliser les tirs sur la couche à ablater.

Dans la plupart des cas, cette tête de tir se trouve à proximité immédiate de la couche à ablater, ce qui impose de protéger les systèmes optiques précités des produits de l'ablation. En outre, comme indiqué dans le document de Brevet EP-A-642 846, on doit faire en sorte que la tête de tir soit animée d'un déplacement très rapide pour assurer une vitesse d'ablation satisfaisante et un coût opératoire global acceptable, ce qui pose des problèmes de mise en oeuvre à l'échelle industrielle.

En général, la tête laser est déportée par rapport à la zone de nettoyage et la lumière est transmise à cette zone grâce à une fibre optique. Un dispositif mécanique permet alors de déplacer une buse, constituée par le bout de cette fibre associé au système optique de focalisation, pratiquement au contact de la surface à décontaminer. Cette solution est connue par les documents de Brevet EP-A-520 847 et US-A-5 780 806 et s'applique communément aux lasers émettant dans les domaines proche infrarouge ou visible, car les lumières infrarouge et visible peuvent être transportées quasiment sans perte d'énergie dans des fibres optiques, à la différence des lasers émettant dans le domaine ultraviolet.

Il est également connu, par exemple par le document de Brevet FR-A-2 700 882, de projeter une fine couche de liquide non absorbante dans le domaine ultraviolet, par exemple de l'eau, sur la surface à ablater et de diriger un rayonnement ultraviolet sur cette surface, qui l'absorbe et est ablatée avec une efficacité accrue par l'ébullition rapide des gouttelettes du liquide la recouvrant. Un inconvénient de cette solution réside dans les quantités supplémentaires de déchets qu'elle engendre lors de l'ablation.

L'énergie requise pour cette ablation étant relativement élevée, tous les dispositifs connus utilisent des lasers pulsés, et accumulent en un même endroit une succession d'impulsions lumineuses. Cette succession à cadence élevée ne permet pas l'évacuation de la matière ablatée, qui reste quelques instants dans l'air au voisinage immédiat de la paroi, sous forme d'une fumée ou d'une suspension. L'arrivée d'une nouvelle impulsion applique à nouveau cette suspension contre la paroi, et crée des « re-dépôts » qui salissent ou noircissent à nouveau cette paroi.

La tendance actuelle de l'homme du métier consiste à augmenter non seulement le nombre d'impulsions laser appliquées successivement en un même point, mais aussi les puissances des tirs laser utilisés dans ces procédés d'ablation par laser pulsé, afin d'améliorer l'efficacité de l'ablation, ces puissances étant typiquement de l'ordre de quelques centaines de watts. Il en résulte des servitudes (i.e. approvisionnements nécessaire en électricité et en air comprimé, notamment) et des contraintes de fonctionnement pénalisantes, ainsi qu'un volume et un coût de mise en oeuvre relativement élevés. Une autre conséquence réside dans le diamètre du faisceau focalisé ayant été délivré par de tels lasers qui est de l'ordre de quelques millimètres, ce qui conduit à des puissances surfaciques sur la couche à ablater qui sont inférieures à celles requises. Cela impose donc d'effectuer des tirs superposés de lasers à hautes cadences, les seuls à pouvoir offrir des temps d'ablation satisfaisants. Or, ces tirs superposés présentent l'inconvénient de favoriser les « re-dépôts » de matériau ablaté, obligeant l'opérateur à effectuer plusieurs passages lors du balayage de la surface à ablater pour en réduire l'importance. Le rendement de l'opération d'ablation en est d'autant pénalisé.

Le document EP-A1-0 091 646 divulgue une méthode de décontamination par ablation laser, qui consiste à diriger un faisceau laser sur la surface à ablater et à le déplacer le long de celle-ci à l'aide d'un mécanisme réflecteur mobile à miroirs ou à prismes qui est commandé à distance et disposé à proximité immédiate de la surface à ablater.

Un but de la présente invention est de proposer un procédé d'ablation d'une couche superficielle d'une paroi, telle qu'un revêtement de peinture dans une installation nucléaire, ledit procédé comprenant au moins une passe de balayage de tirs sur ladite couche d'au moins un faisceau laser pulsé avec une qualité de faisceau $M^2$ inférieure à 20, qui permette de remédier aux inconvénients précités.

A cet effet, le procédé d'ablation selon l'invention comprend une commande directionnelle desdits tirs par déflection optique, de telle sorte que les zones d'impact simples ou composites desdits tirs sur ladite couche soient disjointes ou sensiblement jointives avec un recouvrement minimisé, et en ce que l'on réalise ledit balayage de tirs au moyen d'une tête de déflection immobile qui est située à une distance de ladite couche à ablater comprise entre 200 mm et 1 m.

Ainsi, s'il n'y a qu'un faisceau laser, entre deux tirs successifs de ce faisceau, le centre de la zone d'impact de ce faisceau sur la couche à ablater s'est déplacé d'une distance au moins sensiblement égale à la dimension de la zone d'impact selon l'axe de ce déplacement (i.e. son diamètre, dans le cas d'une zone d'impact de contour circulaire). Dans le cas d'un seul faisceau, le résultat d'un tir est appelé zone d'impact « simple ».

S'il y a plusieurs faisceaux laser, ils sont tirés sur la couche à ablater de manière synchronisée temporellement et juxtaposée spatialement, par exemple au moyen d'un prisme, de manière à former un motif géométrique de répétition, qui pourra être défléchi par les mêmes moyens de déflection optique que pour un seul faisceau laser (ces moyens de déflection optique comprenant par exemple un ou plusieurs miroirs galvanométriques). Le motif ainsi obtenu a la forme d'un carré ou d'un rectangle, éventuellement arrondis aux angles, et les zones d'impact des divers faisceaux sont sensiblement jointives avec un recouvrement minimisé, afin de constituer une zone d'impact « composite » (liée à des impulsions composites) assimilable à une seule et même zone d'impact de plus grande dimension. Enfin, cette zone d'impact composite est aussi choisie de manière à ce que la juxtaposition de plusieurs impacts composites juxtaposés constitue une surface uniformément ablatée.

L'invention est ainsi caractérisée en ce qu'entre deux tirs successifs d'au moins un faisceau laser, le centre de la zone d'impact simple ou composite sur la couche à ablater a été déplacé d'une distance au moins sensiblement égale à la dimension de la zone d'impact simple ou composite selon l'axe du déplacement grâce à des moyens de déflection optique.

Dans ce qui suit, la dimension d'un faisceau homogène est aisée à définir. Lorsque le faisceau est de type gaussien, on définit son diamètre par sa largeur I à 1/e². En effet, pour un faisceau d'énergie $e^{-\frac{2x^2}{\omega^2}}$, on définit la distance x pour la demi-largeur $\omega$ du faisceau comme la distance pour laquelle x = $\omega$, ce qui donne bien

pour cette valeur I = 1/e².

En n'effectuant jamais deux tirs consécutifs en une même zone d'impact, on évite les « re-dépôts », noircissements ou fumées générés dans l'art antérieur, ainsi que l'utilisation d'un fluide (liquide ou gaz) destiné à minimiser ces « re-dépôts ». Le procédé de l'invention limite de ce fait la quantité de déchets générés, ce qui est particulièrement avantageux lorsque la couche à ablater est un produit dangereux ou irradié.

Selon une autre caractéristique de l'invention, ledit procédé d'ablation comprend les deux étapes suivantes :

a) une estimation expérimentale préalable de la fluence $f_0$ dudit ou de chaque faisceau sur ladite couche qui est requise à chaque impulsion pour ladite ou chaque passe (i.e. pour l'ablation superficielle de ladite couche sans altérer le support en vue de son utilisation ultérieure), en tenant compte de paramètres comprenant le matériau constituant ladite couche ablater et l'état de surface de cette dernière, puis

b) un réglage de l'énergie dudit ou de chaque faisceau à chaque impulsion et/ou de la plus grande dimension transversale dudit ou de chaque faisceau pulsé, pour l'obtention de ladite fluence $f_0$ en une seule impulsion.

On notera que la fluence de chaque faisceau est adaptée à la nature et à la matière de la couche à ablater, de manière à ce que l'ablation de la zone d'impact soit effectuée dans le cas le plus général en une seule impulsion laser. Ainsi lorsqu'il y a plusieurs faisceaux, ils peuvent opérer en parallèle dans des parties différentes de la paroi à ablater.

Avantageusement, lorsque l'épaisseur ou le matériau de la couche à ablater rendent difficile l'ablation complète en une seule passe, ledit procédé d'ablation peut comprendre, antérieurement à ladite estimation de la fluence, une estimation du nombre de passes nécessaires en tenant compte du matériau constituant ladite couche, de l'épaisseur de cette dernière et de la cadence dudit balayage de tirs, ces passes requises étant séparées par un intervalle de temps très supérieur au temps de déplacement entre deux points consécutifs. Ce temps correspond généralement au temps de balayage complet de la partie à ablater par les moyens de déflection pour une position donnée du dispositif d'ablation vis-à-vis de la paroi à ablater.

Dans ce cas, la fluence précitée est alors adaptée au retrait d'une passe d'ablation.

De manière avantageuse, la fluence requise pour l'ablation d'une couche, ou pour une passe d'ablation d'une couche, est obtenue en choisissant un ou des faisceaux de bonne qualité, c'est-à-dire dont le coefficient $M^2$ est inférieur à 20, et en focalisant ce ou ces faisceaux sur une petite surface. Il est ainsi possible d'atteindre la fluence requise pour la plupart des applications avec un laser significativement moins puissant et plus petit que dans l'art antérieur. Il est particulièrement avantageux de choisir un coefficient M² plus petit, inférieur à 10.

Dans la présente description, le coefficient ou facteur de qualité M² est défini par le rapport du produit diamètre x divergence, pour le faisceau laser considéré, par le produit diamètre x divergence, pour un faisceau laser monomode transverse de même longueur d'onde.

Pour mesurer ce coefficient M², on place une lentille de faible aberration sphérique entre la source laser et un système de mesure, tel qu'une caméra. Avec ce système de mesure, on détermine le diamètre de faisceau (à 1/e² par exemple), autour de la zone de Rayleigh en prenant suffisamment de points de mesure. On approxime l'ensemble de ces points de mesure avec une hyperbole de type propagation de faisceau, et le coefficient M² est le coefficient de l'hyperbole qui permet d'ajuster les points de mesure.

Conformément à la présente invention, ce coefficient de qualité M² est avantageusement mesuré selon la norme ISO/TC 172/SC 9/WG 1 N 56, ISO/CD 11 146, Optics and optical instruments - lasers and laser related instruments - Test methods for laser beam parameters : beam width, divergence angle and beam propagation factor, 26 novembre 1993.

Les zones d'impact distinctes obtenues par le procédé de l'invention peuvent avantageusement être jointives, dès lors que les moyens de déplacement de chacun des faisceaux sont suffisamment rapides et précis, et lient les vitesses de balayage à la cadence de récurrence des tirs lasers.

L'invention utilise pour ce balayage une tête de déflection comportant au moins un miroir galvanométrique apte à défléchir le ou les faisceaux laser, et préférentiellement au moins deux miroirs galvanométriques, orientés selon des directions orthogonales de manière à balayer sur une partie déterminée de la paroi à ablater quasiment toute la surface de la couche à ablater.

Selon l'invention, on met avantageusement en oeuvre ce balayage en commandant le mouvement du ou des miroirs galvanométriques dans ladite tête de déflection, pour défléchir le ou les faisceaux en une multitude d'emplacements de ladite couche, de manière à atteindre des régions de cette dernière non encore ablatées.

Contrairement à l'art antérieur précité, on notera que cette tête de déflection permet avantageusement de défléchir ou focaliser le ou les faisceaux sans avoir à déplacer cette tête (i.e. cette dernière demeurant immobile lors de l'ablation).

Cette tête de déflection est préférentiellement située à une distance supérieure à 200 mm de la couche à ablater et pouvant aller jusqu'à 1 m. Une valeur comprise entre 400 et 600 mm apparaît optimale, dans la mesure où elle permet de minimiser la pollution du ou des miroirs galvanométriques lors de l'ablation. Avec de telles distances, les têtes galvanométriques permettent sans difficulté d'obtenir un balayage rapide de la partie à ablater, pouvant atteindre plusieurs mètres par seconde. La surface à ablater ainsi balayée est alors de l'ordre de 100 cm² à 3000 cm².

De manière avantageuse, comme précisé ci-dessus en référence aux impulsions composites, les zones d'impact successives sont sensiblement jointives, et la forme des zones d'impact est optimisée pour qu'une juxtaposition d'impacts recouvre le plus complètement possible la surface de la couche à ablater, tout en minimisant les recouvrements (ceux-ci représentent avantageusement moins de 10 % de la superficie de chaque zone d'impact). La forme de la surface globale d'impact est avantageusement celle d'un carré ou un rectangle aux angles arrondis.

La plus grande dimension de chaque zone d'impact peut être comprise entre 10 $\mu$m et 500 $\mu$m.

De préférence, ladite tête de déflection comporte au moins deux miroirs galvanométriques que l'on commande de telle manière que lesdites zones d'impact décrivent successivement une pluralité de lignes parallèles et sensiblement jointives sur ladite couche, chaque ligne étant constituée d'une suite desdites zones d'impacts.

Selon un mode particulièrement avantageux de réalisation de l'invention, la zone d'impact correspondant à chacun desdits tirs est constituée par une pluralité de faisceaux laser synchronisés temporellement et juxtaposés, par exemple au moyen d'un prisme, de manière à former un motif géométrique de répétition dont le contour est polygonal.

On peut alors parler d'un « multiplexage » en parallèle de plusieurs faisceaux laser de base, qui augmente la vitesse d'ablation pour une couche de matériau donnée pratiquement dans le même rapport que le nombre de faisceaux laser utilisés. Par exemple, l'utilisation de quatre lasers juxtaposés en carré à l'aide d'un prisme à quatre facettes permet de doubler la vitesse de balayage d'une ligne et de multiplier par deux le pas entre deux lignes consécutives dudit premier groupe, ce qui donne une vitesse globale d'ablation égale à quatre fois la vitesse obtenue avec un seul faisceau laser.

Le balayage d'une surface bidimensionnelle (i.e. à l'aide de deux miroirs galvanométriques) peut être avantageusement amélioré en décrivant successivement un premier groupe de lignes de manière à les séparer deux à deux entre elles d'un pas prédéterminé correspondant sensiblement à la dimension de chaque point d'impact orthogonalement à la direction des lignes, puis un second groupe desdites lignes qui sont chacune insérées de manière sensiblement jointive entre deux lignes consécutives dudit premier groupe. En d'autres termes, comme pour un balayage d'écran cathodique (en anglais « CRT »), on balaye la surface à ablater en deux demi-trames : la première comportant les lignes impaires, et la seconde comportant les lignes paires.

Il est toutefois avantageux d'éviter en fin de ligne, les temps morts de retour au début de la ligne suivante. Pour cela, lorsque la zone d'impact simple ou composite est arrivée à l'extrémité d'une ligne, le ou les faisceaux sont défléchis orthogonalement à la ligne de manière à ce que l'impact suivant soit juxtaposé au dernier point de la ligne selon cette direction orthogonale aux lignes. Puis pour l'impact d'après, le ou les faisceaux sont à nouveau défléchis selon la direction des lignes, mais en sens inverse du sens de la ligne précédente. Et ainsi de suite à la fin de cette nouvelle ligne.

Si la quantité de matériau à ablater nécessite plusieurs passes successives, il est avantageux de réaliser la passe suivante en orientant les lignes du balayage orthogonalement à la direction qu'elles avaient lors du balayage précédent de manière à réaliser un balayage croisé pour améliorer la qualité de l'ablation. Et ainsi de suite pour les passes successives, s'il y en a plus de deux.

Avantageusement, on utilise une technique de visualisation de l'état de la couche à ablater, telle qu'un contrôle par caméra, par augmentation de contraste obtenu par exemple par fluorescence, ladite technique étant couplée à un traitement d'images pour distinguer les régions ablatées de celles qui ne le sont pas et commander en conséquence le mouvement dudit ou desdits miroirs galvanométriques de la tête de déflection. D'autres techniques comme l'écoute acoustique ou l'analyse spectroscopique du plasma sont possibles pour assister la commande de la tête de déflection.

Encore plus avantageusement, on peut utiliser un rayonnement ultraviolet couplé à ladite technique de visualisation, pour améliorer le contraste entre lesdites régions ablatées et celles qui ne le sont pas.

Dans tous les cas où la fluence $f_0$ requise par la couche à ablater est supérieure à la fluence de la source laser arrivant sur la tête de déflection, un système optique de focalisation est placé immédiatement en aval de cette tête de déflection. Ce système de focalisation a habituellement une distance focale choisie pour faire converger le faisceau laser sur la surface de la couche à ablater. Néanmoins, la distance que doit parcourir le faisceau avant d'impacter cette couche varie, suivant que sa direction est selon l'axe de la lentille ou selon son inclinaison maximale.

Si la focalisation est effectuée par une simple lentille, sa distance focale sera avantageusement choisie de manière à assurer la focalisation pour la moyenne des distances entre la plus courte et la plus longue distance que peut parcourir le faisceau selon son angle de déflection.

Toutefois, selon un mode de réalisation optimal, le dispositif de focalisation permet de focaliser sur un même plan les faisceaux issus de toutes les inclinaisons produites par la tête de déflection, comme par c'est par exemple le cas avec une lentille de type « F-théta ».

Lorsque la paroi à ablater requiert une fluence inférieure à la plus petite fluence produite par le ou les têtes laser, il est avantageux de décaler légèrement le point de focalisation en avant ou en arrière de la surface à ablater (« défocalisation ») afin de réduire cette fluence.

Dans le cas où le procédé selon l'invention est utilisé pour l'ablation d'une couche de peinture (e.g. dans une installation nucléaire) ou d'un autre revêtement superficiel (i.e. d'épaisseur réduite), chaque faisceau laser pulsé présente à chaque impulsion une énergie comprise entre 0,1 mJ et 10 mJ, mais on ne sortirait pas du cadre de l'invention en utilisant un laser plus puissant mis en oeuvre comme décrit ci-dessus.

Dans le cas où le procédé selon l'invention est utilisé pour l'ablation d'une couche de salissure, une énergie moindre par impulsion est appliquée. C'est notamment le cas lorsque la paroi est celle d'un objet précieux et fragile comme un objet d'art, l'énergie de chaque impulsion pouvant être réduite à environ $1\mu J$, pour ne pas nuire à la vie ultérieure de l'oeuvre d'art.

Chaque laser est de préférence un laser à fibre, c'est-à-dire un laser de type à solides dont le milieu actif est localisé dans la fibre optique qui constitue à la fois la cavité laser et le vecteur de transport du faisceau jusqu'au poste de travail. La fibre optique est constituée typiquement d'une double gaine. Le coeur actif en silice dopé avec des ions de terre rare est excité à sa base par un laser à diode, qui est injecté directement dans la fibre. Deux réseaux de Bragg inscrits dans la fibre agissent comme les miroirs d'une cavité laser traditionnelle. Les ions dopants ytterbium (Yb) permettent d'obtenir un spectre d'émission infrarouge à une longueur d'onde de 1,06 $\mu$m.

La cadence de récurrence des impulsions est généralement supérieure à 500 Hz pour ne pas allonger exagérément le temps de traitement de la paroi à ablater, mais on ne sortirait pas du cadre de l'invention en utilisant une cadence plus faible, dès lors qu'on satisfait aux deux étapes a) et b) ci-dessus. A titre d'exemple, on utilise habituellement des cadences de récurrence supérieures à 10 kHz, qui peuvent égaler ou dépasser 20 kHz. Conjuguées à une vitesse de balayage de l'ordre de 2 m/s, ces cadences conduisent à une vitesse d'ablation satisfaisante, même dans le cas de grandes surfaces, comme par exemple dans le cas de la décontamination nucléaire.

De préférence, chaque faisceau laser généré est pulsé selon des impulsions de durée comprise chacune entre 20 ns et 500 $\mu$s et, à titre encore plus préférentiel, comprises entre 50 ns et 200 ns.

Selon une autre caractéristique de l'invention, la valeur extrêmement réduite de plus grande dimension transversale des faisceaux, qui est de préférence comprise entre 10 $\mu$m et 500 $\mu$m et, à titre plus préférentiel dans le cas d'une couche de peinture à ablater, entre 80 $\mu$m et 120 $\mu$m, permet de conférer à chaque faisceau une fluence sur ladite couche allant de 1 J/cm$^2$ à 50 J/cm$^2$ et, avantageusement, allant de 8 J/cm$^2$ à 20 J/cm$^2$, la valeur de fluence visée étant notamment fonction du matériau à ablater et de l'état de surface de ladite couche.

Un faisceau plus énergétique peut être nécessaire dans des cas particuliers comme par exemple l'ablation d'une rugosité, d'une bosse ou d'une surépaisseur de peinture (comme cela se produit dans l'industrie nucléaire pour fixer une contamination ponctuelle), qui peuvent requérir un faisceau plus énergétique. Mais on préfère généralement garder le même faisceau, la même fluence, et effectuer sur la surface à ablater considérée une ou plusieurs autres passes successives.

D'une manière générale, on notera que la longueur d'onde du ou des faisceaux laser utilisés pour la mise en oeuvre de l'invention peut être choisie dans les domaines infrarouge, ultraviolet ou visible, en fonction des modalités de mise en oeuvre du procédé et de la nature et de l'état de surface de la couche à ablater.

Avantageusement, chacun des faisceaux laser utilisés pour la mise en oeuvre de l'invention est pulsé avec une longueur d'onde située dans le domaine infrarouge.

Avantageusement, ledit ou chaque faisceau laser est émis par une tête laser constituant l'extrémité aval d'un laser à fibre tel qu'évoqué ci-dessus.

Selon une autre caractéristique de l'invention, ledit procédé d'ablation comprend, lors dudit balayage, un confinement de l'espace qui est compris entre, d'une part, la tête de déflection prévue pour défléchir le ou les faisceaux laser et éventuellement le dispositif optique de focalisation situé à sa sortie et, d'autre part, la couche à ablater, ledit confinement incluant une aspiration et un filtrage des résidus d'ablation.

Ce confinement permet de contrôler la récupération de l'ensemble des gaz et aérosols générés par l'ablation. Un tel confinement est de type « dynamique » (i.e. l'air confiné est indépendant de l'air ambiant), il peut être réalisé par utilisation d'une hotte de type avaloir de forme sensiblement tronconique divergente entre la tête de déflection et la couche à ablater, cet avaloir étant associé à des moyens d'aspiration et de filtrage. Ce confinement permet d'éviter la dispersion dans l'air ambiant des produits d'ablation générés, mais aussi d'éventuels « re-dépôts » sur ladite couche, ce qui permet de ne pas polluer le dispositif d'ablation - seul l'avaloir pouvant être considéré comme pollué. De plus, cet avaloir permet de protéger les éventuels opérateurs intervenant dans la zone de nettoyage.

On notera que ce confinement est beaucoup plus aisé à mettre en oeuvre dans le cadre de la présente l'invention que dans le cadre des réalisations antérieures, grâce à la distance importante pouvant exister entre la tête de déflection et la couche à ablater.

Selon un mode avantageux de réalisation de l'invention, dans lequel ladite couche à ablater est située dans une zone de nettoyage telle qu'une zone contaminée et ledit ou chaque faisceau est émis par au moins une tête laser associée à des moyens de pompage fournissant un rayonnement électromagnétique à ladite tête, on associe ladite ou chaque tête laser auxdits moyens de pompage par l'intermédiaire d'une fibre optique transmettant ledit rayonnement, de telle sorte que lesdits moyens de pompage soient maintenus à l'extérieur de ladite zone de nettoyage. On se réfèrera à la Demande de Brevet internationale PCT/FR2004/050738 du 20/12/2004 au nom de la Demanderesse pour une description détaillée de cet agencement.

Selon une autre caractéristique avantageuse de l'invention, chaque faisceau laser présente une qualité de faisceau $M^2$ inférieure à 10 et, encore plus avantageusement, inférieure à 2. Cette qualité de faisceau peut avantageusement être obtenue en corrigeant l'aberration sphérique générée par les effets thermiques dans ladite tête laser, laquelle contient alors au moins un barreau laser pompé optiquement d'une manière transversale. A cet effet, on utilise dans cette tête laser un dispositif optique d'aberration sphérique négative d'amplitude proche mais de signe opposé à l'aberration due auxdits effets thermiques, de façon à compenser cette aberration vis-à-vis dudit faisceau laser. On se référera à la Demande de Brevet française FR05 50116 du 13/01/2005 au nom de la Demanderesse pour une description détaillée de cette méthode de correction d'aberration sphérique.

Un dispositif d'ablation selon l'invention pour la mise en oeuvre du procédé tel que défini ci-dessus comporte au moins une tête laser prévue pour générer un faisceau laser pulsé et une tête de déflection montée fixe en aval de ladite ou chaque tête laser pour défléchir des tirs d'au moins un faisceau sur une couche superficielle d'une paroi, en réalisant un balayage sur ladite couche selon des durées d'impulsions pouvant être chacune comprises entre 20 ns et 500 µs.

Selon l'invention, ledit dispositif est tel que ladite ou chaque tête laser est adaptée pour pouvoir générer ledit ou chaque faisceau avec une énergie comprise entre 0,1 mJ et 10 mJ, et en ce que ladite tête de déflection est adaptée pour défléchir ledit ou chaque faisceau en lui conférant une plus grande dimension transversale sur ladite couche pouvant être comprise entre 10 µm et 500 µm.

Selon un mode de réalisation avantageux de l'invention, ce dispositif est tel que :

- ladite énergie est comprise entre 0,1 mJ et 10 mJ,
- la fréquence de récurrence est comprise entre 10 kHz et 100 kHz,
- la durée de chaque impulsion est comprise entre 10 ns et 1 µs, et
- la fluence est comprise entre 1 J/cm² et 50 J/cm².

Ce dispositif est préférentiellement utilisé pour l'ablation de peintures contaminées sur les parois d'un bâtiment nucléaire, avant réhabilitation ou destruction. Mais avec ces mêmes caractéristiques, il peut tout aussi bien couvrir une très vaste plage d'applications où il faut ablater une couche sur une paroi.

Selon une autre caractéristique de ce dispositif selon l'invention, la tête de déflection comporte à sa sortie un système optique de focalisation à lentille qui est adapté pour focaliser le faisceau laser sur la surface de la couche à ablater. Avantageusement, ce dispositif de focalisation est réalisé par une lentille de type « F-théta » qui permet de conserver la focalisation en tout point de la surface balayée, en faisant converger les rayons les plus inclinés d'autant plus loin que leur longueur est plus grande.

Selon une autre caractéristique de l'invention, le dispositif comporte une unité de confinement de l'espace compris entre la tête de déflection et la couche à ablater, ladite unité comprenant des moyens d'aspiration et de filtrage des résidus d'ablation et étant équipée d'un système de positionnement dudit dispositif sur ladite couche selon une force d'application prédéterminée.

Avantageusement, ladite unité de confinement comporte ledit avaloir de forme sensiblement tronconique qui est adapté pour être monté autour de ladite tête de déflection via une ouverture amont dudit avaloir (correspondant à la petite base du tronc de cône formé par l'avaloir) et qui est pourvu d'une entrée d'air à proximité immédiate de cette ouverture amont, de sorte à optimiser l'écoulement des gaz et aérosols d'ablation pour leur aspiration.

Selon une autre caractéristique de l'invention, ladite unité de confinement est pourvue, à proximité de l'ouverture aval de l'avaloir (correspondant à la grande base du tronc de cône précité), d'un moyen de visualisation de l'état de la couche à ablater qui est couplé à un système de traitement d'images pour distinguer les régions ablatées de celles qui ne le sont pas, et commander en conséquence le ou les miroirs galvanométriques.

Pour assurer un confinement dynamique, le débit d'aspiration est prévu pour assurer en tous point des entrées d'air un débit minimal de 0,5 m/s. En outre, ces entrées d'air doivent être agencées de manière à éviter les turbulences et rendre les écoulements laminaires : sous réserve du respect de cette dernière condition, le débit peut atteindre plusieurs centaines de $m^3/h$.

Conformément au mode de réalisation précité du procédé d'ablation selon l'invention se référant à la Demande de Brevet PCT/FR2004/050738 au nom de la Demanderesse, dans lequel ladite couche à ablater est située dans une zone de nettoyage telle qu'une zone contaminée, et ladite ou chaque tête laser est associée à des moyens de pompage fournissant un rayonnement électromagnétique à ladite tête, ledit dispositif d'ablation comporte une fibre optique reliant lesdits moyens de pompage à ladite tête laser et transmettant ledit rayonnement.

D'une manière générale, on notera que les dimensions du dispositif d'ablation selon l'invention peuvent varier en fonction de la superficie de la couche à ablater. En fonction de ces dimensions, ce dispositif d'ablation peut-être soit une machine portable mise en oeuvre par un opérateur, soit une machine portée par un robot. Dans ce cas, on choisira une tête de déflection plus proche de la couche à ablater, par exemple située entre 200 mm et 400 mm.

Le dispositif d'ablation selon l'invention est par ailleurs équipé d'un système robotisé de positionnement (non illustré) conforme à l'état de l'art, qui est adapté pour positionner ce dispositif d'ablation contre la couche à ablater à des emplacements déterminés au centimètre près. De préférence, ce système de positionnement permet d'appliquer l'unité de confinement sur cette couche selon une force de quelques dizaines de newtons, par exemple d'environ 100 N. Des capteurs de position, comme des commutateurs électriques actionnés par le contact avec la paroi, est prévu pour informer l'opérateur ou le téléopérateur du bon positionnement du dispositif d'ablation sur la couche à ablater.

Préférentiellement, ladite ou chaque tête laser du dispositif d'ablation selon l'invention est de type laser à fibre. On notera toutefois que la ou chaque tête laser peut être constituée d'une manière générale de toute source laser (e.g. de type à barreau amplificateur en lieu et place de la fibre optique dudit laser à fibre) qui soit compatible avec les exigences du procédé d'ablation et dudit système de positionnement utilisé pour le dispositif d'ablation.

Conformément à la méthode de correction d'aberration sphérique précitée du procédé selon l'invention se référant à la Demande de Brevet FR05 50116, dans laquelle ladite ou chaque tête laser contient au moins un barreau laser pompé optiquement d'une manière transversale, on corrige l'aberration sphérique générée par les effets thermiques dans ladite tête laser en utilisant dans cette dernière un dispositif optique d'aberration sphérique négative d'amplitude proche mais de signe opposé à l'aberration due auxdits effets thermiques, de façon à compenser cette aberration vis-à-vis dudit faisceau laser.

Avantageusement, ce dispositif optique d'aberration sphérique négative comporte une lentille convergente ou une association de plusieurs lentilles dont l'une au moins est convergente, tel qu'un doublet afocal de deux lentilles convergentes.

Les caractéristiques précitées de la présente invention, ainsi que d'autres, seront mieux comprises à la lecture de la description suivante de plusieurs exemples de réalisation de l'invention, donnés à titre illustratif et non limitatif, ladite description étant réalisée en relation avec les dessins joints, parmi lesquels :

la figure 1 est une vue de dessus schématique et éclatée d'un dispositif laser d'ablation superficielle d'une couche d'une paroi selon l'invention,
la figure 2 est une vue en plan illustrant un exemple préférentiel selon l'invention de distribution géométrique des zones d'impact laser sur la surface de la couche à ablater, et
la figure 3 est une vue en plan illustrant un exemple de combinaison de 2n = 4 faisceaux laser formant chacun la zone d'impact d'un tir sur cette surface.

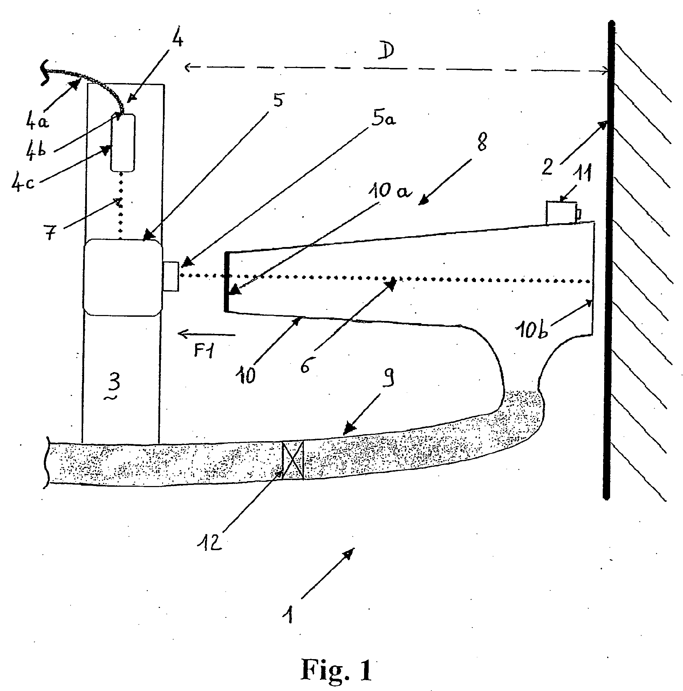

Le dispositif d'ablation 1 illustré à la figure 1 est plus particulièrement destiné à ablater une couche 2 de peinture murale à décontaminer dans une installation nucléaire, ce revêtement 2 correspondant à une surface dite de « catégorie 1 » dans ce domaine (Le. avec un soupçon de contamination de type par aérosols fixés par la peinture).

Le dispositif d'ablation 1 comporte un bâti 3 sur lequel sont essentiellement montés :

- au moins une tête laser 4 (une seule est représentée dans l'exemple de la figure 1) qui est reliée à des moyens de pompage (non illustrés),
- une tête de déflection 5 qui est prévue en aval de la ou des tête(s) laser 4 pour recevoir le ou les faisceau(x) laser incident(s) 7 d'orientation fixe par rapport au bâti 3, et les défléchir en faisceau(x) 6 animés d'un mouvement de balayage, cette tête comportant avantageusement à sa sortie un système optique de focalisation 5a constitué d'une lentille focalisant les tirs laser sur la surface de la couche 2 à ablater, et
- une unité de confinement 8 de l'espace compris entre la tête de déflection 5 et éventuellement son système de focalisation 5a, et la surface de la couche à ablater 2, qui comprend notamment des moyens d'aspiration et de filtrage 9 des résidus d'ablation.

La tête laser 4 illustrée est la tête fournie par le fabricant, c'est-à-dire l'extrémité aval (ou distale) d'un laser à fibre. Elle comporte une lentille de collimation prévue pour un diamètre de faisceau de 9 mm, et se trouve reliée par une fibre optique 4a à l'extrémité amont (ou proximale) du laser à fibre, non représenté sur la figure 1, lequel est pourvu des moyens de pompage. Le laser à fibre utilisé est commercialisé par la société IPG sous la dénomination « YLP » (i.e. « Ytterbium Fiber Lasers »).

Le laser à fibre émet par sa tête laser 4 un faisceau laser 7 pulsé dans le domaine infrarouge - avantageusement dans l'infrarouge proche - qui présente un diamètre allant de 2 à 15 mm et par exemple égal à 9 mm, ce diamètre étant considéré comme constant sur toute la longueur de son trajet dans l'air. Le faisceau étant gaussien, le pas entre 2 impacts vaut $1/e^2$. On considère que ce diamètre est aussi celui de la zone d'impact, le reste du faisceau étant en recouvrement avec l'impact suivant. Dans le cas d'une pluralité de faisceaux laser, les diverses têtes laser sont associées à ce niveau, éventuellement avec un dispositif permettant de rapprocher les axes des divers faisceaux. Chacun de ces faisceaux 7 est généré à une cadence de « récurrence » élevée de 20 kHz, avec une énergie par impulsion de 1 mJ et une qualité de faisceau $M^2$ de l'ordre de 1,6.

La tête de déflection 5 comporte des miroirs galvanométriques commercialisés par la société ARGES sous la dénomination « RHINO », ou bien par la société SCANLAB sous la dénomination « hurrySCAN ». A sa sortie est fixé (dans la plupart des modes de réalisation) un système de focalisation constitué d'une lentille formant par exemple un objectif de 420 mm. De façon préférentielle, cette lentille est de type « F-théta » focalisant les tirs laser sur la surface de la couche 2 à ablater. Elle donne au point focal un faisceau 6 projeté sur la couche 2 avec un diamètre d'environ 100 $\mu$m, une fluence de 12 $J/cm^2$ et une profondeur de champ de 10 mm.

L'unité de confinement 8 comporte un avaloir 10 de forme sensiblement tronconique qui est adapté pour être monté par sa petite base sur le bâti 3, autour de la tête de déflection 5 (voir flèche F1 à la figure 1). L'avaloir 10 est pourvu, en son extrémité destinée à être montée autour de la tête de déflection 5, d'une ouverture 10a de type hublot prévue pour laisser passer le faisceau laser focalisé 6. Cette ouverture peut aussi être réalisée en effectuant le montage de l'avaloir 10 sur la tête de déflection 5 par l'intermédiaire d'entretoises.

L'avaloir 10 est avantageusement pourvu d'une caméra externe 11 à proximité de son autre ouverture 10b qui est destinée à être appliquée sur la couche 2 à ablater, cette caméra 11 étant destinée à la visualisation de l'état de la couche 2 afin de contrôler et de commander l'ablation. Avantageusement, on adjoint une source de lumière ultraviolette à cette caméra 11, de sorte à améliorer le contraste de la couche de peinture 2 par rapport au matériau de support sous-jacent (par exemple du béton).

La caméra 11 est couplée à un système de traitement d'images (non illustré), par exemple par binarisation de l'image après seuillage, qui est conçu pour permettre de distinguer les régions ablatées de la couche 2 de celles qui ne le sont pas et, suite à un transfert de l'image ainsi obtenue à un logiciel de gestion équipant la tête de déflection 5, pour commander en conséquence les miroirs du système optique de focalisation.

L'avaloir 10 est prévu pour assurer un confinement dynamique des gaz et aérosols tout en protégeant l'opérateur et, via une entrée d'air (non représentée), augmentée par les entretoises de fixation ci-dessus, il autorise un écoulement laminaire de ces gaz et aérosols afin de les récupérer dans des filtres 12 équipant les moyens d'aspiration 9 dont le débit est de 180 $m^3/h$.

Ces filtres 12 sont spécifiquement conçus pour ne pas être colmatés par les résidus d'ablation, grâce à une caractérisation préalable de ces derniers. Un filtre 12 de type « THE » (i.e. très haute efficacité) équipe avantageusement ces moyens d'aspiration 9, de sorte à former une barrière ultime pour ces résidus d'ablation. Le choix des filtres 12 dépend de la nature, de la masse et de la taille des particules générées par l'ablation.

Selon une variante, le dispositif d'ablation selon l'invention possède une pluralité de faisceaux laser, chacun étant associé à une tête de déflection qui lui est propre, et cette pluralité d'associations d'une source laser et d'une tête de déflection est alors intégrée à un seul et même avaloir. Il va de soi qu'alors le synchronisme des faisceaux importe peu : seule compte la juxtaposition des parties ablatées qu'ils créent.

Le dispositif d'ablation 1 peut être équipé d'une interface appropriée le rendant automatisé et porté par un dispositif polyarticulé (non illustré), tel qu'un porteur spécial, un portique motorisé ou un bras robotisé, pour assurer son déplacement visant à couvrir une superficie d'ablation donnée.

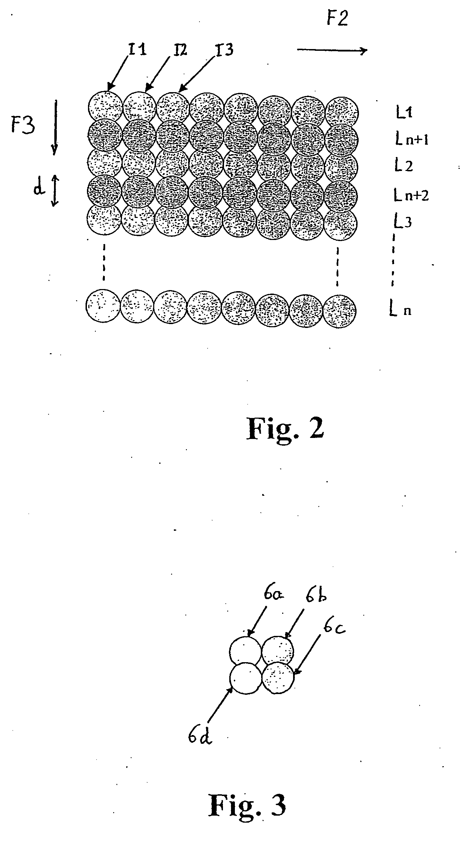

Le dispositif d'ablation 1 selon l'invention fonctionne de la manière suivante, comme illustré en relation avec les figures 1 et 2.

On met en place le dispositif d'ablation 1 contre la couche 2 de peinture à une distance D de l'ordre de 500 mm de celle-ci, via un système de positionnement (non illustré) de l'unité de confinement 8, puis on réalise les tirs de faisceaux laser 6 en commandant le mouvement des miroirs du de la tête de déflection 5 (i.e. sans déplacer cette dernière), de manière à décrire le balayage suivant de la partie à ablater.

Comme illustré à la figure 2, ce balayage est tel que les zones d'impact I1, I2, I3, ... obtenues sur la couche 2 décrivent successivement une pluralité de lignes L1, L2, L3, ..., Ln, Ln+1, Ln+2, ... parallèles et sensiblement jointives, chaque ligne correspondant à une succession de tirs dont les zones d'impact I1, I2, I3, ... sont elles-mêmes sensiblement jointives entre elles (voir les flèches F2 et F3 illustrant ce balayage bidimensionnel).

Dans un premier temps, on décrit un premier groupe de lignes L1, L2, L3, ..., Ln en les séparant deux à deux entre elles d'un pas d prédéterminé correspondant sensiblement au diamètre de chaque faisceau 6 sur la couche 2, puis, dans un second temps, on décrit un second groupe de lignes Ln+1, Ln+2, ... chacune insérées de manière sensiblement jointive entre deux lignes L1 et L2, L2 et L3, ... consécutives du premier groupe.

On a réalisé des essais d'ablation à une vitesse de déplacement de 2m/s pour les faisceaux focalisés 6, ce qui permet d'assurer des zones d'impact jointives I1, I2, I3, ..., en relation avec la fréquence des tirs laser utilisée qui est de 20 kHz (voir les contours circulaires de ces zones d'impacts qui sont tangents entre eux).

On notera que ce balayage linéaire et sensiblement jointif permet de minimiser les recouvrements entre zones d'impact I1, I2, I3, ... et d'ablater uniquement les régions de la couche 2 qui n'ont pas encore été parfaitement traitées, permettant ainsi un gain de temps pour l'ablation complète de la couche 2.

On a ainsi obtenu une ablation satisfaisante, rapide et propre d'une superficie de 625 cm$^2$ de la couche 2 de peinture sans avoir à déplacer le dispositif d'ablation 1, avec une épaisseur de couche 2 de peinture ablatée de l'ordre de 36 $\mu$m au m$^2$ en 2 heures et sans « redépôt », fumées ni dispersion de résidus dans la salle d'ablation, grâce à l'aspiration et au filtrage procurés par l'unité de confinement 8.

On notera également que les servitudes liées au dispositif d'ablation 1 (i.e. électricité, air comprimé) sont réduites et peuvent être aisément déportées hors de la zone de nettoyage.

Comme illustré à la figure 3, on peut utiliser avantageusement quatre faisceaux lasers 6a, 6b, 6c et 6d synchronisés temporellement qui sont respectivement obtenus par quatre têtes laser et qui sont avantageusement juxtaposés en carré à l'aide d'un prisme à quatre facettes, en vue de doubler la vitesse de balayage d'une ligne L1, L2, L3, ..., Ln, Ln+1, Ln+2, ...et le pas entre deux lignes consécutives du premier groupe précité, pour l'obtention d'une vitesse globale d'ablation multipliée par quatre. De cette manière, on obtient une ablation tout aussi satisfaisante, propre et encore plus rapide de la couche 2 de peinture, avec une épaisseur de peinture 2 ablatée de l'ordre de 36 $\mu$m au m$^2$ en seulement une demi-heure.

**Revendications**

1. Procédé d'ablation d'une couche superficielle (2) d'une paroi, ledit procédé comprenant au moins une passe de balayage de tirs sur ladite couche d'au moins un faisceau laser (6 ou 6a, 6b, 6c, 6d) pulsé, une commande directionnelle desdits tirs par déflection optique **caractérisé en ce que** le faisceau est de qualité M$^2$ inférieure à 20 et **en ce que** les zones d'impact simples ou composites desdits tirs sur ladite couche soient disjointes ou sensiblement jointives avec un recouvrement minimisé, et **en ce que** l'on réalise ledit balayage de tirs au moyen d'une tête de déflection (5) immobile qui est située à une distance (D) de ladite couche à ablater comprise entre 200 mm et 1 m.

2. Procédé d'ablation selon la revendication 1, **caractérisé en ce qu'**il comprend :

   a) une estimation préalable de la fluence f$_0$ dudit ou de chaque faisceau sur ladite couche qui est requise à chaque impulsion pour ladite ou chaque passe, en tenant compte de paramètres comprenant le matériau constituant ladite couche ablater et l'état de surface de cette dernière, puis
   b) un réglage de l'énergie dudit ou de chaque faisceau à chaque impulsion et/ou de la plus grande dimension transversale dudit ou de chaque faisceau pulsé, pour l'obtention de ladite fluence f$_0$.

3. Procédé d'ablation selon la revendication 2, **caractérisé en ce qu'**il comprend, antérieurement à ladite estimation de la fluence, une estimation du nombre desdites passes requises, en tenant compte du matériau constituant ladite couche, de l'épaisseur de cette dernière et de la cadence dudit balayage de tirs.

4. Procédé d'ablation selon une des revendications précédentes, **caractérisé en ce que** la zone d'impact (I1, I2, I3, ...) correspondant à chacun desdits tirs est constituée par un nombre pair de faisceaux lasers (6a, 6b, 6c et 6d) synchronisés temporellement et juxtaposés, par exemple au moyen d'un prisme, de manière à former un motif géométrique de répétition dont le contour est polygonal.

**5.** Procédé d'ablation selon une des revendications précédentes, **caractérisé en ce que** l'on met en oeuvre ledit balayage en commandant le mouvement d'au moins un miroir galvanométrique qui est logé dans ladite tête de déflection (5) pour défléchir le ou lesdits faisceaux (6 ou 6a, 6b, 6c, 6d) en une multitude d'emplacements de ladite couche (2), de manière à atteindre des régions de cette dernière non encore ablatées.

**6.** Procédé d'ablation selon une des revendications précédentes, **caractérisé en ce que** ladite tête de déflection (5) comporte au moins deux miroirs galvanométriques que l'on commande de telle manière que lesdites zones d'impact (I1, I2, I3, ...) décrivent successivement une pluralité de lignes (L1, L2, L3, ..., Ln, Ln+1, Ln+2, ...) parallèles et sensiblement jointives sur ladite couche (2), chaque ligne étant constituée d'une suite desdites zones d'impacts.

**7.** Procédé d'ablation selon la revendication 6, **caractérisé en ce que** l'on met en oeuvre ledit balayage de manière à décrire successivement :

   - un premier groupe desdites lignes (L1, L2, L3,..., Ln) en les séparant deux à deux entre elles d'un pas prédéterminé correspondant sensiblement à ladite plus grande dimension (d) de chaque zone d'impact (I1, I2, I3, ...) sur ladite couche (2), puis
   - un second groupe desdites lignes (Ln+1, Ln+2, ...) qui sont chacune insérées de manière sensiblement jointive entre deux lignes consécutives (L1 et L2, L2 et L3) dudit premier groupe.

**8.** Procédé d'ablation selon une des revendications précédentes, **caractérisé en ce que** l'on utilise une technique de visualisation de l'état de ladite couche (2), telle qu'un contrôle par caméra (11), par augmentation de contraste obtenu par exemple par fluorescence, ladite technique étant couplée à un traitement d'images pour distinguer les régions ablatées de celles qui ne le sont pas et commander en conséquence le mouvement dudit ou desdits miroirs galvanométriques de ladite tête de déflection.

**9.** Procédé d'ablation selon une des revendications précédentes, **caractérisé en ce qu'**il comprend, lors dudit balayage, un confinement de l'espace compris entre ladite tête de déflection (5) et ladite couche (2) à ablater, ledit confinement incluant une aspiration et un filtrage des résidus d'ablation.

**10.** Procédé d'ablation selon une des revendications précédentes, **caractérisé en ce que** ledit ou chaque faisceau laser (6 ou 6a, 6b, 6c, 6d) est pulsé selon des durées d'impulsions qui sont chacune supérieures comprises entre 20 ns et 500 $\mu$s.

**11.** Procédé d'ablation selon une des revendications précédentes, **caractérisé en ce que** ladite fluence $f_0$ est comprise entre 1 J/cm$^2$ et 50 J/cm$^2$.

**12.** Procédé d'ablation selon une des revendications précédentes, **caractérisé en ce que** lesdites zones d'impact présentent chacune une plus grande dimension qui est comprise entre 10 $\mu$m et 500 $\mu$m.

**13.** Procédé d'ablation selon une des revendications précédentes, ladite couche à ablater étant constituée d'un revêtement de peinture dans une installation nucléaire, **caractérisé en ce que** chaque faisceau laser présente à chaque impulsion une énergie comprise entre 0,1 mJ et 10 mJ.

**14.** Procédé d'ablation selon une des revendications précédentes, **caractérisé en ce que** l'on effectue ledit balayage de tirs selon une cadence supérieure à 500 Hz.

**15.** Procédé d'ablation selon une des revendications précédentes, ledit ou chaque faisceau (7) étant émis par au moins une tête laser contenant au moins un barreau laser pompé optiquement d'une manière transversale, **caractérisé en ce que** l'on corrige l'aberration sphérique générée par les effets thermiques dans ladite tête laser en utilisant dans cette dernière un dispositif optique d'aberration sphérique négative d'amplitude proche mais de signe opposé à l'aberration due auxdits effets thermiques, de façon à compenser cette aberration vis-à-vis dudit faisceau laser.

**16.** Procédé d'ablation selon une des revendications précédentes, ladite couche (2) à ablater étant située dans une zone de nettoyage telle qu'une zone contaminée, et ledit ou chaque faisceau (7) étant émis par au moins une tête laser associée à des moyens de pompage, **caractérisé en ce que** l'on associe ladite ou chaque tête laser auxdits moyens de pompage par l'intermédiaire d'une fibre optique transmettant ledit rayonnement, de telle sorte que lesdits moyens de pompage soient maintenus à l'extérieur de ladite zone de nettoyage.

**17.** Procédé d'ablation selon une des revendications précédentes, **caractérisé en ce que** ledit ou chaque faisceau laser (6 ou 6a, 6b, 6c, 6d) est pulsé dans le domaine infrarouge.

**18.** Procédé d'ablation selon une des revendications précédentes, **caractérisé en ce que** ledit ou chaque faisceau (7) est émis par une tête laser (4) constituant l'extrémité aval d'un laser à fibre.

19. Dispositif d'ablation (1) pour la mise en oeuvre du procédé selon une des revendications précédentes, ledit dispositif comportant au moins une tête laser (4) prévue pour générer un faisceau laser pulsé (7) et une tête de déflection (5) montée fixe en aval de ladite ou chaque tête laser pour défléchir des tirs d'au moins un faisceau (6 ou 6a, 6b, 6c, 6d) sur une couche superficielle (2) d'une paroi, en réalisant un balayage sur ladite couche selon des durées d'impulsions pouvant être chacune comprises entre 20 ns et 500 μs, **caractérisé en ce que** ladite ou chaque tête laser est adaptée pour pouvoir générer ledit ou chaque faisceau (7) avec une énergie comprise entre 0,1 mJ et 10 mJ, et **en ce que** ladite tête de déflection est adaptée pour défléchir ledit ou chaque faisceau (6 ou 6a, 6b, 6c, 6d) en lui conférant une plus grande dimension transversales sur ladite couche pouvant être comprise entre 10 μm et 500 μm.

20. Dispositif d'ablation (1) selon la revendication 19, **caractérisé en ce que** ladite tête de déflection (5) comporte au moins un miroir galvanométrique qui est mobile sous la commande de moyens de commande.

21. Dispositif d'ablation (1) selon la revendication 19 ou 20, **caractérisé en ce qu'**il comporte une unité de confinement (8) de l'espace compris entre ladite couche (2) à ablater et ladite tête de déflection (5), ladite unité de confinement comprenant des moyens d'aspiration (9) et de filtrage (12) des résidus d'ablation et étant équipée d'un système de positionnement dudit dispositif sur ladite couche selon une force d'application prédéterminée.

22. Dispositif d'ablation (1) selon les revendications 19 à 21, **caractérisé en ce que** ladite unité de confinement (8) est pourvue d'un moyen de visualisation de l'état de ladite couche (2), tel qu'une caméra (11), qui est couplé à un système de traitement d'images pour distinguer les régions ablatées de celles qui ne le sont pas, et commander en conséquence ledit ou lesdits miroirs galvanométriques.

23. Dispositif d'ablation (1) selon une des revendications 19 à 22, **caractérisé en ce que** ladite ou chaque tête laser (4) est de type laser à fibre.

24. Dispositif d'ablation (1) selon une des revendications 19 à 22, ladite ou chaque tête laser contenant au moins un barreau laser pompé optiquement d'une manière transversale, **caractérisé en ce que** l'on corrige l'aberration sphérique générée par les effets thermiques dans ladite tête laser en utilisant dans cette dernière un dispositif optique d'aberration sphérique négative d'amplitude proche mais de signe opposé à l'aberration due auxdits effets thermiques, de façon à compenser cette aberration vis-à-vis dudit faisceau laser.

25. Dispositif d'ablation (1) selon la revendication 24, **caractérisé en ce que** ledit dispositif optique d'aberration sphérique négative comporte une lentille convergente ou une association de plusieurs lentilles dont l'une au moins est convergente, tel qu'un doublet afocal de deux lentilles convergentes.

**Patentansprüche**

1. Abtragverfahren einer Oberflächenschicht (2) einer Wand, wobei das Verfahren mindestens einen Schussabtastdurchgang auf der Schicht mindestens eines gepulsten Laserstrahls (6 oder 6a, 6b, 6c, 6d) mit einer Richtungssteuerung der Schüsse durch optische Deflektion umfasst, **dadurch gekennzeichnet, dass** der Strahl die Qualität M$^2$ unter 20 hat und dass die einfachen oder Verbund-Aufschlagzonen der Schüsse auf die Schicht unterbrochen oder etwa aneinanderstoßend mit einer minimalen Überlappung sind, und dass die Schussabtastung mittels eines unbeweglichen Deflektionskopfs (5) durchgeführt wird, der sich in einem Abstand (D) zwischen 200 mm und 1 m inklusive von der abzutragenden Schicht befindet.

2. Abtragverfahren nach Anspruch 1, **dadurch gekennzeichnet, dass** es umfasst:

a) eine vorherige Ermittlung der Fluenz $f_0$ des oder jedes Strahls auf der Schicht, die bei jedem Impuls für den oder jeden Durchgang unter Berücksichtigung von Parametern, die das Material, aus dem die abzutragende Schicht besteht, und den Zustand der Oberfläche derselben umfassen, erforderlich ist, dann
b) eine Einstellung der Energie des oder jedes Strahls bei jedem Impuls und/oder der größten transversalen Abmessung des oder jedes gepulsten Strahls zwecks Erhalts der Fluenz $f_0$.

3. Abtragverfahren nach Anspruch 2, **dadurch gekennzeichnet, dass** es vor der Ermittlung der Fluenz eine Ermittlung der Anzahl der erforderlichen Durchgänge unter Berücksichtigung des Materials, aus dem die Schicht besteht, der Dicke derselben und der Taktung der Schussabtastung umfasst.

4. Abtragverfahren nach einem der vorangehenden Ansprüche, **dadurch gekennzeichnet, dass** die Aufschlagzone (I1, 12, 13, ...), die jedem der Schüsse entspricht, von einer geraden Anzahl temporär synchronisierter und beispielsweise mittels eines Prismas nebeneinandergelagerter Laserstrahlen (6a, 6b, 6c und 6d) gebildet ist, so dass ein geometrisches Wiederholungsmotiv gebildet wird, dessen Kontur polygonal ist.

5. Abtragverfahren nach einem der vorangehenden Ansprüche, **dadurch gekennzeichnet, dass** die Abtastung durch Steuern der Bewegung von mindestens einem galvanometrischen Spiegel durchgeführt wird, der in dem Deflexionskopf (5) untergebracht ist, um den Strahl oder die Strahlen (6 oder 6a, 6b, 6c, 6d) an eine Vielzahl von Stellen der Schicht (2) abzulenken, um noch nicht abgetragene Regionen derselben zu erreichen.

6. Abtragverfahren nach einem der vorangehenden Ansprüche, **dadurch gekennzeichnet, dass** der Deflexionskopf (5) mindestens zwei galvanometrische Spiegel aufweist, die derart gesteuert werden, dass die Aufschlagzonen (I1, 12, 13, ...) aufeinanderfolgend eine Vielzahl von parallelen und auf der Schicht (2) etwa verbundenen Linien (L1, L2, L3, ..., Ln, Ln+1, Ln+2, ...) schreiben, wobei jede Linie von einer Fortsetzung der Aufschlagzonen gebildet ist.

7. Abtragverfahren nach Anspruch 6, **dadurch gekennzeichnet, dass** die Abtastung derart durchgeführt wird, dass aufeinanderfolgend geschrieben wird:

   - eine erste Gruppe der Linien (L1, L2, L3,..., Ln), die untereinander paarig in einem Abstand getrennt sind, der etwa der größten Abmessung (d) jeder Aufschlagzone (I1, 12, 13, ...) auf der Schicht (2) entspricht, dann
   - eine zweite Gruppe der Linien (Ln+1, Ln+2, ...), die jeweils zwischen zwei aufeinanderfolgenden Linien (L1 und L2, L2 und L3) der ersten Gruppe etwa verbindend eingefügt sind.

8. Abtragverfahren nach einem der vorangehenden Ansprüche, **dadurch gekennzeichnet, dass** eine Visualisierungstechnik des Zustands der Schicht (2) wie eine Kontrolle durch Kamera (11) durch Erhöhung des erhaltenen Kontrasts beispielsweise durch Fluoreszenz verwendet wird, wobei die Technik an eine Bildverarbeitung gekoppelt ist, um die abgetragenen Regionen von denen zu unterscheiden, die es nicht sind, und um folglich die Bewegung des oder der galvanometrischen Spiegel des Deflexionskopfs zu steuern.

9. Abtragverfahren nach einem der vorangehenden Ansprüche, **dadurch gekennzeichnet, dass** es bei der Abtastung einen Einschluss des Raums inklusive zwischen dem Deflexionskopf (5) und der abzutragenden Schicht (2) umfasst, wobei der Einschluss eine Absaugung und eine Filterung der Abtragungsrückstände einschließt.

10. Abtragverfahren nach einem der vorangehenden Ansprüche, **dadurch gekennzeichnet, dass** der oder die Laserstrahlen (6 oder 6a, 6b, 6c, 6d) gemäß Impulsdauern gepulst werden, die jeweils über zwischen 20 ns und 500 $\mu$s inklusive liegen.

11. Abtragverfahren nach einem der vorangehenden Ansprüche, **dadurch gekennzeichnet, dass** die Fluenz $f_0$ zwischen 1 J/cm$^2$ und 50 J/cm$^2$ inklusive ist.

12. Abtragverfahren nach einem der vorangehenden Ansprüche, **dadurch gekennzeichnet, dass** die Aufschlagzonen jeweils eine größere Abmessung aufweisen, die zwischen 10 $\mu$m und 500 $\mu$m inklusive ist.

13. Abtragverfahren nach einem der vorangehenden Ansprüche, wobei die abzutragende Schicht aus einer Farbschicht in einer Kernanlage besteht, **dadurch gekennzeichnet, dass** jeder Laserstrahl bei jedem Impuls eine Energie zwischen 0,1 mJ und 10 mJ aufweist.

14. Abtragverfahren nach einem der vorangehenden Ansprüche, **dadurch gekennzeichnet, dass** die Schussabtastung gemäß einer Taktung über 500 Hz durchgeführt wird.

15. Abtragverfahren nach einem der vorangehenden Ansprüche, wobei der oder jeder Strahl (7) von mindestens einem Laserkopf ausgesendet wird, der mindestens einen optisch transversal gepumpten Laserstab enthält, **dadurch gekennzeichnet, dass** die sphärische Aberration, die von den thermischen Effekten in dem Laserkopf erzeugt wird, durch Verwendung in diesem einer optischen Vorrichtung mit negativer sphärischer Aberration mit einer Amplitude in der Nähe, aber mit umgekehrtem Vorzeichen zu der von den thermischen Effekten hervorgerufenen Aberration, korrigiert wird, um diese Aberration gegenüber dem Laserstrahl zu kompensieren.

16. Abtragverfahren nach einem der vorangehenden Ansprüche, wobei sich die abzutragende Schicht (2) in einer Reinigungszone wie einer kontaminierten Zone befindet, und der oder jeder Strahl (7) von mindestens einem Laserkopf ausgesendet wird, der Pumpmitteln zugeordnet ist, **dadurch gekennzeichnet, dass** der oder jeder Laserkopf den Pumpmitteln mittels einer optischen Faser zugeordnet ist, die die Strahlung überträgt, so dass sich die Pumpmittel außerhalb der Reinigungszone befinden.

17. Abtragverfahren nach einem der vorangehenden Ansprüche, **dadurch gekennzeichnet, dass** der oder jeder Laserstrahl (6 oder 6a, 6b, 6c, 6d) im Infrarotbereich gepulst ist.

18. Abtragverfahren nach einem der vorangehenden Ansprüche, **dadurch gekennzeichnet, dass** der oder jeder Strahl (7) von einem Laserkopf (4) ausgesendet wird, der das nachgelagerte Ende eines Faserlasers bildet.

19. Abtragvorrichtung (1) für die Umsetzung des Verfahrens nach einem der vorangehenden Ansprüche, wobei die Vorrichtung mindestens einen Laserkopf (4) aufweist, der vorgesehen ist, einen gepulsten Laserstrahl (7) zu erzeugen, und einen fest nach dem oder jedem Laserkopf montierten Deflexionskopf (5), um Schüsse von mindestens einem Strahl (6 oder 6a, 6b, 6c, 6d) auf eine Oberflächenschicht (2) einer Wand durch Durchführen einer Abtastung auf der Schicht gemäß Impulsdauern, die jeweils zwischen 20 ns und 500 $\mu$s inklusive betragen können, abzulenken, **dadurch gekennzeichnet, dass** der oder jeder Laserkopf ausgebildet ist, um den oder jeden Strahl (7) mit einer Energie zwischen 0,1 mJ und 10 mJ inklusive erzeugen zu können, und dass der Deflexionskopf ausgebildet ist, um den oder jeden Strahl (6 oder 6a, 6b, 6c, 6d) abzulenken, indem ihm eine größere transversale Abmessung auf der Schicht verliehen wird, die zwischen 10 $\mu$m und 500 $\mu$m inklusive betragen kann.

20. Abtragvorrichtung (1) nach Anspruch 19, **dadurch gekennzeichnet, dass** der Deflexionskopf (5) mindestens einen galvanometrischen Spiegel aufweist, der anhand der Steuerung von Steuermittel beweglich ist.

21. Abtragvorrichtung (1) nach Anspruch 19 oder 20, **dadurch gekennzeichnet, dass** sie eine Einschlusseinheit (8) des Raums zwischen der abzutragenden Schicht (2) und dem Deflexionskopf (5) aufweist, wobei die Einschlusseinheit Absaug- (9) und Filtermittel (12) der Abtragungsrückstände umfasst und mit einem Positionierungssystem der Vorrichtung auf der Schicht gemäß einer vorbestimmten Anwendungskraft ausgestattet ist.

22. Abtragvorrichtung (1) nach den Ansprüchen 19 bis 21, **dadurch gekennzeichnet, dass** die Einschlusseinheit (8) mit einem Visualisierungsmittel des Zustands der Schicht (2) wie eine Kamera (11) ausgestattet ist, die an ein Bildverarbeitungssystem gekoppelt ist, um die abgetragenen Regionen von denen zu unterscheiden, die es nicht sind, und um folglich den oder die galvanometrischen Spiegel entsprechend zu steuern.

23. Abtragvorrichtung (1) nach einem der Ansprüche 19 bis 22, **dadurch gekennzeichnet, dass** der oder jeder Laserkopf (4) von Typ Faserlaser ist.

24. Abtragvorrichtung (1) nach einem der Ansprüche 19 bis 22, wobei der oder jeder Laserkopf mindestens einen optisch transversal gepumpten Laserstab enthält, **dadurch gekennzeichnet, dass** die sphärische Aberration, die von den thermischen Effekten in dem Laserkopf erzeugt wird, durch Verwendung in diesem einer optischen Vorrichtung mit negativer sphärischer Aberration mit einer Amplitude in der Nähe, aber mit umgekehrtem Vorzeichen zu der von den thermischen Effekten hervorgerufenen Aberration, korrigiert wird, um diese Aberration gegenüber dem Laserstrahl zu kompensieren.

25. Abtragvorrichtung (1) nach Anspruch 24, **dadurch gekennzeichnet, dass** die optische Vorrichtung mit negativer sphärischer Aberration eine konvergierende Linse oder eine Kombination aus mehreren Linsen aufweist, von denen mindestens eine konvergierend ist, wie ein brennpunktloses Doppel aus zwei konvergierenden Linsen.

**Claims**

1. An ablation method for ablating a surface layer (2) of a wall, said method comprising at least one scanning pass in which shots are fired on to said layer from at least one pulsed laser beam (6 or 6a, 6b, 6c, 6d), a directional control of said shots by optical deflection, **characterized in that** the beam has a quality $M^2$ of less than 20 and **in that**, the simple or composite impact zones of said shots on said layer are separate or substantially contiguous with a minimized overlap, and **in that** said shot scanning is carried out by means of a stationary deflection head (5) that is located at a distance (D) of between 200 mm and 1 m from said layer (2) to be ablated.

2. The ablation method as claimed in claim 1, **characterized in that** it comprises:

   a) a prior estimation of the fluence $f_0$ of said or each beam on said layer, which estimation is required at each pulse for said or each pass, taking parameters, including the constituent material of said layer to be ablated and the surface state of the latter, into account; then
   b) an adjustment of the energy of said or each beam at each pulse and/or of the largest transverse dimension of said or each pulsed beam in order to obtain said fluence $f_0$.

3. The ablation method as claimed in claim 2, **characterized in that** it comprises, prior to said estimation of the fluence, an estimation of the number of said passes required, taking the constituent material of said layer, the thickness of the latter and the scan frequency of said shot scanning into account.

4. The ablation method as claimed in one of the preceding claims, **characterized in that** the impact zone (I1, 12, 13, ...) corresponding to each of said shots is formed by an even number of laser beams (6a, 6b, 6c and 6d) that are temporally synchronized and juxtaposed, for example by means of a prism, so as to create a geometric repeat pattern, the outline of which is polygonal.

5. The ablation method as claimed in one of the preceding claims, **characterized in that** said scanning is carried out by controlling the movement of at least one galvanometric mirror housed in said deflection head (5) in order to deflect said beam or beams (6 or 6a, 6b, 6c, 6d) on to a multitude of places on said layer (2) so as to reach regions of the latter that are not yet ablated.

6. The ablation method as claimed in one of the preceding claims, **characterized in that** said deflection head (5) has at least two galvanometric mirrors that are controlled in such a manner that said impact zones (I1, 12, 13, ...) describe, in succession, a plurality of substantially contiguous parallel lines (L1, L2, L3, ..., Ln, Ln+1, Ln+2, ...) on said layer (2), each line consisting of a series of said impact zones.

7. The ablation method as claimed in claim 6, **characterized in that** it carries out said scanning so as to describe, in succession:

    - a first group of said lines (L1, L2, L3, ..., Ln), separating them pairwise by a predetermined spacing corresponding substantially to said largest dimension (d) of each impact zone (I1, 12, 13, etc.) on said layer (2); then
    - a second group of said lines (Ln+1, Ln+2, etc.) which are each inserted so as to be substantially contiguous between two consecutive lines (L1 and L2, L2 and L3) of said first group.

8. The ablation method as claimed in one of the preceding claims, **characterized in that** a display technique is used to display the state of said layer (2), such as an inspection using a camera (11), by increasing the contrast obtained, for example by fluorescence, said technique being coupled to image processing in order to distinguish the ablation regions from those that are not ablated and consequently to control the movement of said galvanometric mirror or mirrors of said deflection head.

9. The ablation method as claimed in one of the preceding claims, **characterized in that** it comprises, during said scanning, a confinement of the space lying between said deflection head (5) and said layer (2) to be ablated, said confinement including a step of sucking out and filtering the ablation residues.

10. The ablation method as claimed in one of the preceding claims, **characterized in that** said or each laser beam (6 or 6a, 6b, 6c, 6d) is pulsed with pulse durations that are each between 20 ns and 500 $\mu$s.

11. The ablation method as claimed in one of the preceding claims, **characterized in that** said fluence $f_0$ is between 1 $J/cm^2$ and 50 $J/cm^2$.

12. The ablation method as claimed in one of the preceding claims, **characterized in that** said impact zones each have a largest dimension that is between 10 $\mu$m and 500 $\mu$m.

13. The ablation method as claimed in one of the preceding claims, said layer to be ablated consisting of a paint coating in a nuclear plant, **characterized in that** each laser beam delivers each pulse with an energy of between 0.1 mJ and 10 mJ.

14. The ablation method as claimed in one of the preceding claims, **characterized in that** said shot scanning is carried out for a scan frequency of greater than 500 Hz.

15. The ablation method as claimed in one of the preceding claims, said or each beam (7) being emitted by at least one laser head containing at least one laser rod pumped by transverse optical pumping, **characterized in that** the spherical aberration generated by the thermal effects in said laser head is corrected using, in said head, an optical device having a negative spherical aberration of amplitude close to, but of opposite sign, to the aberration due to said thermal effects, so as to compensate for this aberration with respect to said laser beam.

16. The ablation method as claimed in one of the preceding claims, said layer (2) to be ablated being located in a cleaning zone, such as a contaminated zone, and said or each beam (7) being emitted by at least one laser head connected to pumping means, **characterized in that** said or each laser head is connected to said pumping means via an optical fiber that transmits said radiation, in such a way that said pumping means are kept outside said cleaning zone.

17. The ablation method as claimed in one of the preceding claims, **characterized in that** said or each laser beam (6 or 6a, 6b, 6c, 6d) is pulsed in the infrared range.

18. The ablation method as claimed in one of the preceding claims, **characterized in that** said or each beam (7) is emitted by a laser head (4) constituting the downstream end of a fiber laser.

19. An ablation device (1) for implementing the method as claimed in one of the preceding claims, said device comprising at least one laser head (4) designed to generate a pulsed laser beam (7) and a deflection head (5) fixedly mounted downstream of said or each laser head in order to deflect the shots of at least one beam (6 or 6a, 6b, 6c, 6d) on to a surface layer (2) of a wall, scanning over said layer with pulse durations that may each be between 20 ns and 500 μs, **characterized in that** said or each laser head is suitable for generating said or each beam (7) with an energy of between 0.1 mJ and 10 mJ and **in that** said deflection head is suitable for deflecting said or each beam (6 or 6a, 6b, 6c, 6d) by giving it a largest transverse dimension on said layer that may be between 10 μm and 500 μm.

20. The ablation device (1) as claimed in claim 19, **characterized in that** said deflection head (5) comprises at least one galvanometric mirror that can be moved under the control of control means.

21. The ablation device (1) as claimed in claim 19 or 20, **characterized in that** it comprises a confinement unit (8) for confining the space lying between said layer (2) to be ablated and said deflection head (5), said confinement unit comprising ablation residue suction means (9) and filtering means (12) and being equipped with a system for positioning said device on said layer with a predetermined application force.

22. The ablation device (1) as claimed in claims 19 to 21, **characterized in that** said confinement unit (8) is provided with a means of displaying the state of said layer (2), such as a camera (11), which is coupled to an image processing system in order to distinguish the ablated regions from those that are not ablated and consequently to control said galvanometric mirror or mirrors.

23. The ablation device (1) as claimed in one of claims 19 to 22, **characterized in that** said or each laser head (4) is of the fiber laser type.

24. The ablation device (1) as claimed in one of claims 19 to 22, said or each laser head containing at least one laser rod pumped by transverse optical pumping, **characterized in that** the spherical aberration generated by the thermal effects in said laser head are connected by using, in the latter, an optical device having a negative spherical aberration of amplitude close to, but of opposite sign, the aberration due to thermal effects so as to compensate for this aberration with respect to said laser beam.

25. The ablation device (1) as claimed in claim 24, **characterized in that** said optical device having a negative spherical aberration comprises a conversion lens or a combination of several lenses, at least one of which is convergent, such as an afocal doublet of two convergent lenses.

EP 1 899 082 B1

**Fig. 1**

16

**Fig. 2**

**Fig. 3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 642846 A
- EP 520847 A
- US 5780806 A
- FR 2700882 A
- EP 0091646 A1
- FR 2004050738 W
- FR 0550116